# EUROPEAN PATENT SPECIFICATION

(11) **EP 3 999 397 B1**
(45) Date of publication and mention of the grant of the patent: **09.10.2024**
(21) Application number: 20841230.4
(22) Date of filing: 12.07.2020
(51) Int. Cl.: B62B 1/12, B62B 5/00, B62B 1/00, B62B 1/26

(54) **MULTIFUNCTION GARDEN CART**
MULTIFUNKTIONSGARTENWAGEN
CHARIOT DE JARDIN MULTIFONCTION

(30) Priority: 15.07.2019 US 201962873987 P
(43) Date of publication of application: 25.05.2022
(73) Proprietor: Hizmi, Yoav, Moshav Hagor (IL)
(72) Inventor: Hizmi, Yoav, Moshav Hagor (IL)
(74) Representative: Fezzardi, Antonio
(86) International application number: PCT/IL2020/050780
(87) International publication number: WO 2021/009750

(56) References cited:
- WO-A1-2007/104071
- DE-B3- 102006 024 875
- DE-U1- 202007 012 723
- DE-U1- 212015 000 307
- FR-A1- 3 053 014
- GB-A- 2 427 603
- US-A- 4 629 203
- US-B1- 7 543 842
- US-B2- 8 348 301

## Description

This application claims the benefit of U.S. Provisional Patent Application 62/873,987 filed on 07/15/2019.

### TECHNICAL FIELD

The present invention generally relates to the field of carts and more particularly, the present invention relates to multifunction garden cart.

### BACKGROUND ART

Most wheelbarrows and garden carts are designed with a fixed shape or configuration. Their carrying volume of the scoop is limited.

US patent 3,875,981 by Brenner et al discloses "Multi Positioning Garden Cart" that includes a small bag and a mechanism to help in collecting the debris from the ground and empty it into the bag. This cart cannot be used to carry small loads, such as lawn Mower.

US patent 6,666,465 Chan discloses "Garden Trolley" that includes a removable collecting bag and array of removable attachment means for garden tools. However, the size of the bag is small, and is does not fit for large gardens.

International patent application publication No. WO2007/104071A1 discloses a foldable shopping trolley comprising a frame from which a cloth shopping bag or the like can be detachably suspended. In particular, said frame comprises a lower frame member in the form of a U-shaped bar with a strut connected between two free ends thereof. A pair of structural frame members are pivotally connected at one end to the lower frame by pins. Also, said frame members are connected, at their other end, to an upper frame member, formed by a pair of parallel elongated arms spaced apart from one another.

German patent No. DE102006024875B3 discloses a transport device, e.g. for boxes or barrels, said device comprising a chassis having at least three wheels, in particular two swivel front wheels and two fixed rear wheels, and a correspondingly dimensioned platform for receiving an item, e.g. a barrel or box, for transport purposes. Said known device further comprises a drawbar, connected to the front portion of the device through a fastening means.

German utility model No. DE212015000307U discloses a transport device comprising, inter alia, a load carrier, a handle, and a plurality of wheels, wherein said wheels are configured to switch between an extended configuration for use, where said wheels are aligned perpendicular to the loading carrier, and a folded configuration for storage, where said wheels are aligned parallel to the load carrier.

Hence, there is a need for a multipurpose garden cart that can be pushed by hand or dragged by a motorized vehicle.

### SUMMARY OF THE INVENTION

The invention is defined in claim 1 and discloses a multifunction garden cart, that can carry builders sack, hanged loads, or can be adapted with carrying surface for moving garden goods such as grass, and flowers. The cart is comprised of U-shaped base built of side booms connected by front boom. The base is connected to two wheels attached at the center of the side booms. Various types of handles can be connected to the front boom, so it can be moves by a person or attached to a towing vehicle. Two booms pivotally attached to the side booms, can be secured vertically to the plane of the U-shaped. A closed square top frame for use as builders sack support, is removably, pivotally attached at the top of the vertical booms.

The disclosed cart is unique because it is foldable and can be stored in a small space. It is adapted to conveniently carry builders sack so it can contain high volume of debris or other materials needed in the garden.

The disclosed cart can be moved by hand or by a towing vehicle, such as grass mower.

### BRIEF DESCRIPTION OF DRAWINGS

Fig 1 shows basic structure of the disclosed garden cart.
Fig 2 shows detail of an embodiment of the vertical post.

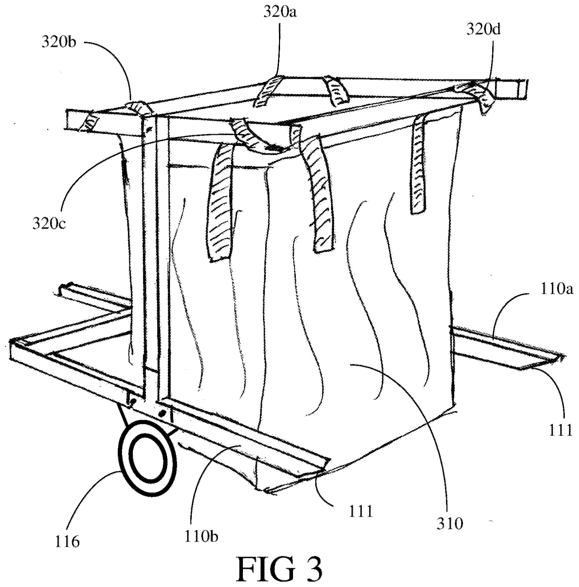

FIG 3 presents the use of the cart for carrying builder's bag.
FIG 4 presents cart in folded state for storage.
FIG 5 another embodiment with human carrying handles.
FIG 6 cart ready for load carrying.

### DETAILED DESCRIPTION

The invention will be described more fully hereinafter, with reference to the accompanying drawings, in which certain possible embodiments of the invention are shown. The invention may, however, be embodied in many different forms and should not be construed as limited to the embodiments set forth herein; rather these embodiments are provided so that the disclosure will be thorough and complete, and will fully convey the scope of the invention to those skilled in the art.

In the following description, the same numerical references refer to similar elements. The embodiments, geometrical configurations, materials mentioned and/or dimensions shown in the figures or described in the present description are embodiments only, given solely for exemplification purposes.

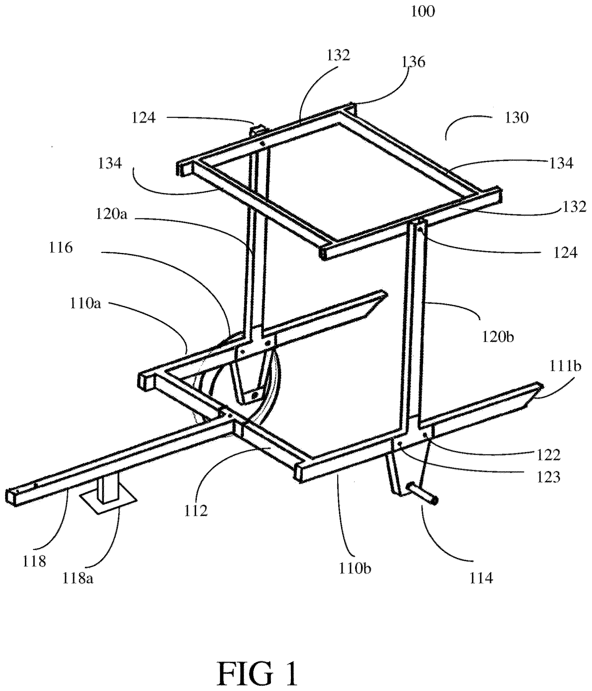

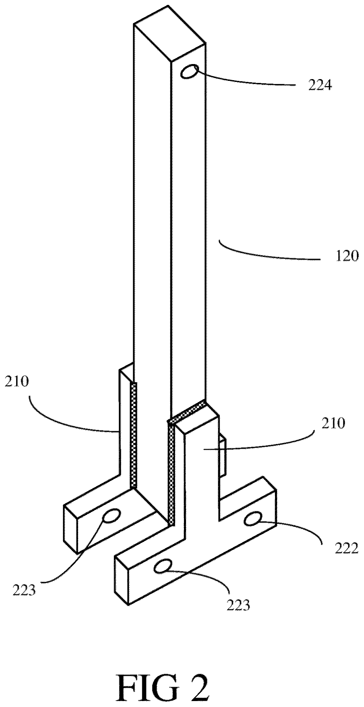

The basic structure of the disclosed multi-function garden cart is presented in fig 1. The cart **100** is comprised of a U-shaped bottom frame having U, built from side booms **110a** and **110b** connected by a front boom **112.** On each side boom a shaft **114** (shown only on side boom **110b)** is rigidly attached on which the cartwheels **116** are mounted. Different towing handles can be simply attached to the connecting boom **112.** In fig 1 a towing handle **118** is attached to the connecting boom **112.** Support plane **118a** is attached to the towing handle so the cart can rest on the two wheels and the support plane, when it is not connected to a towing vehicle, such as a motorised grass mower. Two vertical booms, **120a** and **120b** are pivotally attached to the side booms **110a** and **110b,** respectively. Each vertical boom can be positioned vertically or horizontally relative to the bottom frame by use of pins **122** and **123** for vertical boom **120b.** Note that the wheel shafts **(114** for vertical boom **120b)** are mounted under the position of the vertical booms **120a, 120b.** Detailed description of such positioning mechanism is presented in fig 2, as will be described in the following section.

An embodiment of the positional mechanism for mounting the vertical booms **120a** and **120b** is presented in fig 2. Each vertical boom **120a** or **120b** is comprised of a post **120,** to which two T-shaped plates **210** are welded, as shown in the figure. On the bottom part of the lower part of the T-shaped plates there are holes **222** and **223** through which quick release hinge spring balls can be inserted. Note that on the side booms, **110a** and **110b,** there are matching holes to those on the T-shaped plate that allows a quick release hinge spring balls to be inserted through the holes in the T-shaped plates and through the holes in the side booms. When in vertical position, two quick release hinge spring balls **122, 123** are inserted through the holes **222** and **223** in the vertical boom and the hole in the base side boom so that the vertical boom is secured in vertical position. When the vertical boom is to be positioned in horizontal state, one hinge spring ball is taken out, so that the remaining hinge spring ball is the hinge around which the boom can be rotated. At the top of each vertical booms there is a hole **224** through which pin hinge **124** can be inserted.

A closed square like top frame **130,** called builders sack support, are built from booms **132** and **134** is pivotally attached to the vertical booms **120a** and **120b** via pin hinges **124.** The top frame is built so that the two side booms **132** are longer than the distance between the front and rear booms **134.**

The structure of the top frame **130** enables to easily attach builder's bag **310** to the garden cart, thus providing large volume for collecting scraps of garden pruning. Note that the builder's bag handles **320a, 320b, 320c** and **320d** are surrounding the edges of the top frame side booms. The cart can be tilted so it is supported by the two wheels **116** and the supporting edges **111** at the end of the base frame side booms **110a** and **110b.** In that position the builders sack is resting on the ground, with its top wide open, so it can be easily loaded, or it can be released from the cart.

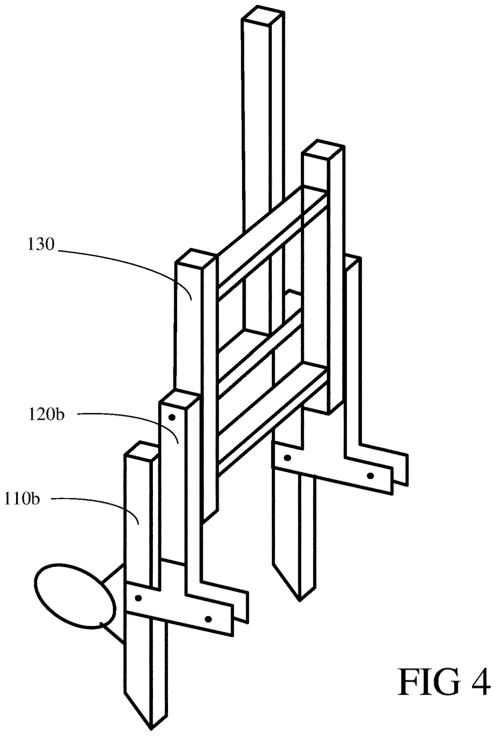

Fig 4 shows the garden cart in folded state. In this state the cart occupies minimum volume so it can be easily stored. Note, that in another embodiment, the wheels can be attached via hinges so for storage they can be rotated and aligned with the plane of the booms.

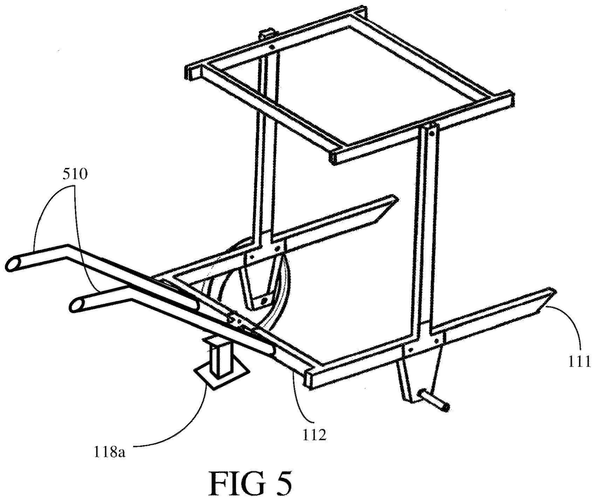

In fig 5, garden cart with handles suitable for human towing is presented. The handles **510** are attached to the base connecting boom **112.** They can be attached at different locations so that the distance between the two handles can be optimized for the carrier. Note that when in rest the cart can be supported either by the wheels and the front support plane **118a** or by the wheels and the rear of the base side booms **111.**

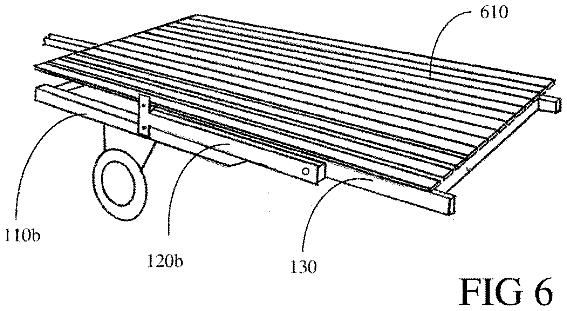

Additional use of the garden cart is presented in fig 6. In this configuration the cart is used as carrying platform. The top frame **130** and the vertical side booms are rotated so that they lie on the base frame. A wooden deck **610** is place on top of the booms.

## Claims

1. A multifunction garden cart (100), comprising:
a) U-shaped bottom frame comprising a pair of side booms (110a, 110b), connected by a front boom (112);
b) two wheels (116), each mounted on a respective shaft (114) rigidly attached to the center of a respective one of said side booms (110a, 110b) of the bottom frame;
c) a towing handle (118) comprising a resting support (118a), so that the cart (100) can rest on the two wheels (116) and the resting support (118a), the towing handle (118) being removably connected to the front boom (112) of the bottom frame;
d) two vertical booms (120a, 120b), each pivotally attached to a respective one of the side booms (110a, 110b) of the bottom frame, wherein said vertical booms (120a, 120b) are configured to be positioned vertically or horizontally relative to the bottom frame; and
e) a closed square-like top frame (130) for use as support for a builder's bag (310), the top frame (130) comprising two side booms (132) which are rigidly connected by front and rear connecting booms (134), the side booms (132) of the top frame being longer than a distance between the front and rear connecting booms (134), so that handles (320a, 320b, 320c, 320d) of the builder's bag (310) can be hanged thereto, said top frame (130) being removably and pivotally attached at the middle of its side booms (132) to the top of said vertical booms (120a, 120b).

2. The multifunction garden cart (100) as in claim 1, wherein the cart (100) further comprises a couple of handles (510), removably connected to the front boom (112) of the bottom frame, so that the cart (100) can be moved by a person using said couple of handles (510).

3. The multifunction garden cart (100) as in claim 1, wherein the towing handle (118) is configured for connecting the cart (100) to a towing vehicle, such as a motorised grass mower.

4. The multifunction garden cart (100) as in claim 1, wherein, in a folded configuration of the cart (100), the vertical booms (120a, 120b) are pivoted such as to rest on the bottom frame, and the top frame (130) is pivoted to be aligned with the plane of the vertical booms.

5. The multifunction garden cart (100) as in claim 4, where the wheels (116) are attached to the bottom frame via hinges so that, when the cart (100) is in the folded configuration, they can be rotated to lie on a plane that is parallel to the bottom frame, for storage.

## Patentansprüche

1. Multifunktions-Gartenwagen (100), der umfasst:
a) einen U-förmigen unteren Rahmen, der ein Paar seitlicher Stangen (110a, 110b) umfasst, die durch eine vordere Stange (112) verbunden sind;
b) zwei Räder (116), von denen jedes an einer jeweiligen Welle (114) montiert ist, die starr an der Mitte einer jeweiligen der seitlichen Stangen (110a, 110b) des unteren Rahmens angebracht ist;
c) eine Deichsel (118), die einen Stützfuß (118a) umfasst, so dass der Wagen (100) auf den beiden Rädern (116) und dem Stützfuß (118a) ruhen kann, wobei die Deichsel (118) abnehmbar mit der vorderen Stange (112) des unteren Rahmens verbunden ist;
d) zwei vertikale Stangen (120a, 120b), von denen jede an der jeweiligen der seitlichen Stangen (110a, 110b) des unteren Rahmens angelenkt ist, wobei die vertikalen Stangen (120a, 120b) dafür konfiguriert sind, vertikal oder horizontal relativ zu dem unteren Rahmen positioniert zu werden; und
e) einen geschlossenen quadratartigen oberen Rahmen (130) zur Verwendung als Stütze für einen Bigpack (310), wobei der obere Rahmen (130) zwei seitliche Stangen (132) umfasst, die starr durch eine vordere und eine hintere Verbindungsstange (134) verbunden sind, wobei die seitlichen Stangen (132) des oberen Rahmens länger sind als eine Distanz zwischen der vorderen und der hinteren Verbindungsstange (134), so dass Tragschlaufen (320a, 320b, 320c, 320d) des Bigpacks (310) daran aufgehängt werden können, wobei der obere Rahmen (130) abnehmbar in der Mitte seiner seitlichen Stangen (132) an der Oberseite der vertikalen Stangen (120a, 120b) angelenkt ist.

2. Multifunktions-Gartenwagen (100) nach Anspruch 1, wobei der Wagen (100) des Weiteren ein Paar Griffe (510) umfasst, die abnehmbar mit der vorderen Stange (112) des unteren Rahmens verbunden sind, so dass der Wagen (100) durch eine Person unter Verwendung des Paares von Griffen (510) bewegt werden kann.

3. Multifunktions-Gartenwagen (100) nach Anspruch 1, wobei die Deichsel (118) zum Verbinden des Wagens (100) mit einem Zugfahrzeug, wie zum Beispiel einem Rasentraktor, konfiguriert ist.

4. Multifunktions-Gartenwagen (100) nach Anspruch 1, wobei die vertikalen Stangen (120a, 120b) in einer zusammengeklappten Konfiguration des Wagens (100) so geschwenkt werden, dass sie auf dem unteren Rahmen aufliegen, und der obere Rahmen (130) so geschwenkt wird, dass er auf die Ebene der vertikalen Stangen ausgerichtet ist.

5. Multifunktions-Gartenwagen (100) nach Anspruch 4, wobei die Räder (116) über Scharniere so an dem unteren Rahmen angebracht sind, dass sie, wenn sich der Wagen (100) in der zusammengeklappten Konfiguration befindet, zum Zweck der Lagerung so gedreht werden können, dass sie auf einer Ebene liegen, die parallel zu dem unteren Rahmen verläuft.

## Revendications

1. Chariot (100) de jardin multifonction, comprenant :
a) un cadre inférieur en forme de U comprenant une paire de bras latéraux (110a, 110b), reliés par un bras avant (112) ;
b) deux roues (116), chacune montée sur un arbre respectif (114) fixé de manière rigide au centre d'un bras latéral respectif desdits bras latéraux (110a, 110b) du cadre inférieur ;
c) une poignée de remorquage (118) comprenant un support de repos (118a), de sorte que le chariot (100) puisse reposer sur les deux roues (116) et le support de repos (118a), la poignée de remorquage (118) étant reliée de manière amovible au bras avant (112) du cadre inférieur ;
d) deux bras verticaux (120a, 120b), chacun fixé de manière pivotante à un bras latéral respectif des bras latéraux (110a, 110b) du cadre inférieur, dans lequel lesdits bras verticaux (120a, 120b) sont configurés pour être positionnés verticalement ou horizontalement par rapport au cadre inférieur ; et
e) un cadre supérieur (130) de forme carrée fermé destiné à être utilisé comme support pour un sac à gravats (310), le cadre supérieur (130) comprenant deux bras latéraux (132) qui sont reliés de manière rigide par des bras de liaison avant et arrière (134), les bras latéraux (132) du cadre supérieur étant plus longs qu'une distance entre les bras de liaison avant et arrière (134), de sorte que des poignées (320a, 320b, 320c, 320d) du sac à gravats (310) puissent être suspendues à celui-ci, ledit cadre supérieur (130) étant fixé de manière amovible et pivotante au niveau du milieu de ses bras latéraux (132) au sommet desdits bras verticaux (120a, 120b).

2. Chariot (100) de jardin multifonction selon la revendication 1, dans lequel le chariot (100) comprend en outre un couple de poignées (510), relié de manière amovible au bras avant (112) du cadre inférieur, de sorte que le chariot (100) puisse être déplacé par une personne utilisant ledit couple de poignées (510).

3. Chariot (100) de jardin multifonction selon la revendication 1, dans lequel la poignée de remorquage (118) est configurée pour relier le chariot (100) à un véhicule de remorquage, tel qu'une tondeuse à gazon motorisée.

4. Chariot (100) de jardin multifonction selon la revendication 1, dans lequel, dans une configuration pliée du chariot (100), les bras verticaux (120a, 120b) sont pivotés de manière à reposer sur le cadre inférieur, et le cadre supérieur (130) est pivoté pour être aligné avec le plan des bras verticaux.

5. Chariot (100) de jardin multifonction selon la revendication 4, où les roues (116) sont fixées au cadre inférieur par le biais de charnières de sorte que, lorsque le chariot (100) est dans la configuration pliée, elles puissent être tournées pour reposer sur un plan qui est parallèle au cadre inférieur, pour le stockage.
